# EUROPÄISCHE PATENTSCHRIFT

(11) **EP 2 181 488 B1**
(45) Veröffentlichungstag und Bekanntmachung des Hinweises auf die Patenterteilung: **12.10.2011**
(21) Anmeldenummer: 08801162.2
(22) Anmeldetag: 14.08.2008
(51) Int. Cl.: H02G 3/12

(54) **VORRICHTUNG ZUR VERANKERUNG EINES INSTALLATIONSKASTENS IN EINER ÖFFNUNG IN EINER WANDSCHALE**
DEVICE FOR ANCHORING AN INSTALLATION CABINET IN AN OPENING IN A WALL SHELL
DISPOSITIF POUR L'ANCRAGE D'UN COFFRET D'INSTALLATION DANS UNE OUVERTURE D'UNE PAROI MURALE

(30) Priorität: 25.08.2007 DE 102007040212
(43) Veröffentlichungstag der Anmeldung: 05.05.2010
(73) Patentinhaber: Hager Electro GmbH & Co. KG, 66440 Blieskastel (DE)
(72) Erfinder: DISSEL, Klaus, 66131 Saarbrücken (DE); BECKER, Bernhard, 66578 Schiffweiler (DE)
(74) Vertreter: Bernhardt, Reinold
(86) Internationale Anmeldenummer: PCT/DE2008/001339
(87) Internationale Veröffentlichungsnummer: WO 2009/026884

(56) Entgegenhaltungen:
- WO-A-2008/122280
- DE-U1- 29 907 196
- US-A1- 2006 249 306
- US-A1- 2008 202 787

## Beschreibung

Die Erfindung betrifft eine Vorrichtung zur Verankerung eines Installationskasten, insbesondere eines Zähler- oder/und Verteilerkostens, in einer Öffnung in einer Wandschale, wobei der in die Öffnung versenkte Kasten am Rand der Öffnung mit einem Anschlag gegen die Vorderseite der Wandschale anliegt, mit wenigstens einem Verankerungselement, das durch einen von der Vorderseite des Kastens her zugänglichen Antriebs- und Spannmechanismus in eine Position verschwenkbar ist, in der es die Wandschale am Rand der Öffnung hintergreift und den Kasten zwischen dem Anschlag und dem Verankerungselement einspannt.

Durch Benutzung bekannte solche Verankerungsvorrichtungen weisen ein am Installationskasten befestigtes, als Winkelhebel geformtes Verankerungselement auf, das zum Einspannen des Kastens den rechten oder linken Rand der Öffnung hintergreift. Das Verankerungselement kann durch eine den Antriebsmechanismus bildende Schraube verschwenkt werden und wird in einer Führung außerdem translatorisch bewegt und spannt einen den Anschlag bildenden Flansch des Kastens gegen die Wandschale fest.

Aus der US 2006/0249306 A1 geht eine Anschlussdose hervor, die Verankerungselemente aufweist, die sich hinter einen horizontalen Rand einer Wandschale verschwenken lassen.

Der Erfindung liegt die Aufgabe zugrunde, eine Vorrichtung der eingangs erwähnten Art zu schaffen, die den Anforderungen, die an die Befestigung des Installationskastens gestellt werden, besser gerecht wird.

Diese Aufgabe wird erfingdungsgemäß dadurch gelöst, dass das Verankerungselement zum wahlweisen Hintergreifen der Wandschale an dem horizontalen Rand oder einem vertikalen Rand der Öffnung vorgesehen ist oder das Verankerungselement zum Hintergreifen der Wandschale an dem horizontalen Rand und ein weiteres Verankerungselement zum Hintergreifen an dem vertikalen Rand vorgesehen ist.

Die Verankerung kann flexibel an die baulichen Gegebenheiten der Wand angepasst werden. Das Verankerungselement kann zum Hintergreifen der horizontalen oder der vertikalen Seite ausgerichtet und entsprechend festgespannt werden.

Sind paarweise zwei Verankerungsvorrichtungen oder eine einzige mit zwei Verankerungselementen versehene Verankerungsvorrichtung vorgesehen, wird nur das jeweils benötigte Verankerungselement verwendet.

Vorteilhaft kann der Kasten z.B. direkt an einem Seitenrand einer mehrschaligen Wand, die mit dem Seitenrand an eine massive Wand angrenzt, befestigt werden. Ferner ist es mit der erfindungsgemäßen Vorrichtung möglich, in einer einzigen breiten Öffnung in einer Wandschale nebeneinander mehrere Installationskästen zu befestigen. Vorhandener Platz kann somit besser genutzt werden.

In einer besonders bevorzugten Ausführungsform der Erfindung sind das Verankerungselement und der Antriebsmechanismus in einer von dem Kasten getrennten Baueinheit zusammengefasst, die in der hier ausdrücklich miteinbezogenen DE 10 2007 016 685.2 beschrieben ist.

Für die Aufnahme der Baueinheit ist am Kasten zweckmäßigerweise ein Sitz vorgesehen, vorzugsweise außenseitig am Kasten.

In einer weiteren Ausgestaltung der Erfindung sind zwei, vorzugsweise um 90 ° zueinander verdreht angeordnete, Sitze vorgesehen, wobei vorzugsweise ein Sitz am horizontalen und der andere am vertikalen Rand angeordnet ist.

In einer besonders bevorzugten Ausgestaltung der Erfindung ist der Sitz an einer Ecke des Kastens angeordnet und vorzugsweise zur Aufnahme der Baueinheit in zwei um 90° zueinander verdrehten Positionen eingerichtet. Zweckmäßigerweise ist der Gegenhalter durch einen zum Kastenboden parallelen Boden des Sitzes bzw. der Sitze gebildet. Die durch das Verankerungselement auf die Rückseite der hintergriffenen Wandschale ausgeübte Kraft erzeugt eine Gegenkraft am Boden des Sitzes.

In einer Ausgestaltung der Erfindung weist der Sitz eine Halterung auf, die die Baueinheit in Richtung senkrecht zum Gegenhalter stützt. Die Halterung kann durch einen Steg oder eine Wandung mit Öffnungen für das Verankerungselement gebildet sein.

In einer weiteren Ausgestaltung der Erfindung weist die Baueinheit und/oder der Sitz ein Mittel, vorzugsweise eine lösbare Raste, zur Befestigung der Baueinheit am Installationskasten auf.

Zweckmäßigerweise ist die Baueinheit von der Vorderseite des Kastens aus in den Sitz einsetzbar. Die Ausrichtung der Baueinheit kann, auch wenn der Installationskasten bereits in die Wandschalenöffnung eingeschoben ist, noch ausgewählt oder geändert werden.

Die Erfindung wird nachfolgend anhand von Ausführungsbeispielen und der bestegenden, sich auf diese Ausführungsbeispiele beziehenden Zeichnungen näher erläutert. Es zeigen:
- Fig. 1: schematisch zwei in einer Wandschale einer doppelschaligen Wand versenkte Verteilerkästen mit Verankerungsvorrichtungen nach der Erfindung,
- Fig. 2: einen zur Verankerung gemäß der Erfindung vorgesehenen Verteilerkasten in isometrischer Darstellung,
- Fig. 3: einen Verteilerkasten gemäß Fig. 2 und eine Baueinheit einer Verankerungsvorrichtung nach der Erfindung in isometrischer Darstellung,
- Fig. 4: die Baueinheit von Fig. 3 eingesetzt in eine Aufnahme im Verteilerkasten in isometrischer Darstellung,
- Fig. 5 und 6: die in den Verteilerkasten eingesetzte Baueinheit in Draufsicht, und
- Fig. 7: einen Verteilerkasten mit zwei eingesetzten Baueinheiten von Verankerungsvorrichtung in isometrischer Darstellung.

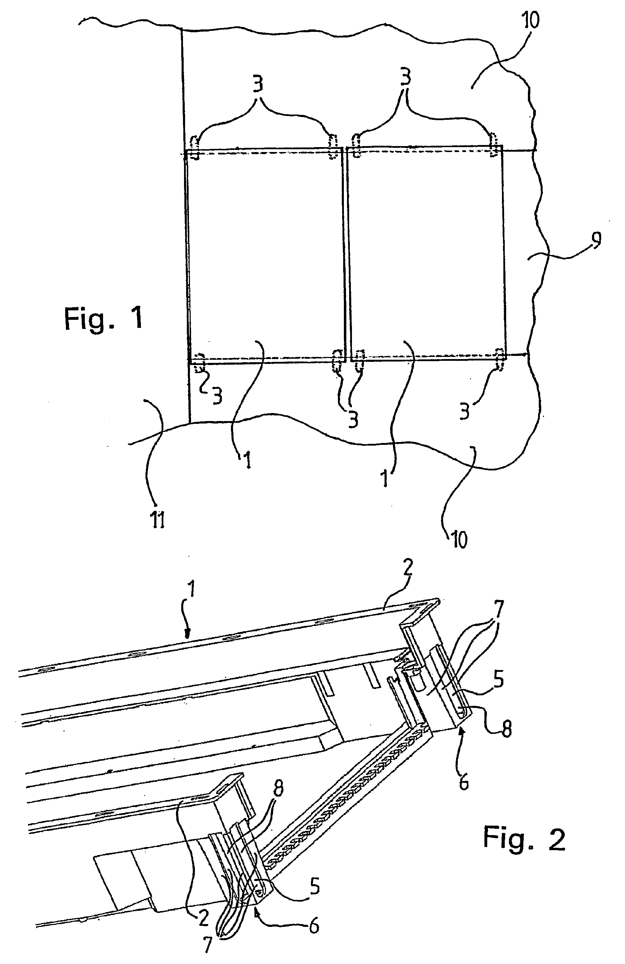

Fig. 1 zeigt zwei Installationskästen 1, die nebeneinander in einer Öffnung 9 in einer an eine massive Wand 11 angrenzenden Wandschale einer doppelschaligen Wand aus Gipskartonplatten 10 angeordnet sind. Jeder Kasten 1 ist durch vier Verankerungsvorrichtungen, deren Verankerungselemente 3 die Gipskartonplatten 10 hintergreifen, an ihren Ober- und Unterseiten an der Wandschale befestigt. Der linke Kasten ist direkt neben der massiven Wand 11 befestigt.

In Fig. 2 ist ein Verteilerkasten mit einem einen Anschlag bildenden Flansch 2 und zwei Steckplätzen 5 für eine Baueinheit 4 dargestellt. Die Steckplätze 5 weisen einen einen Gegenhalter bildenden Boden 6, der sich parallel zum Boden des Installationskastens 1 erstreckt, und parallel zur Kastenwand mit Öffnungen 8 versehene Wandungen 7 auf.

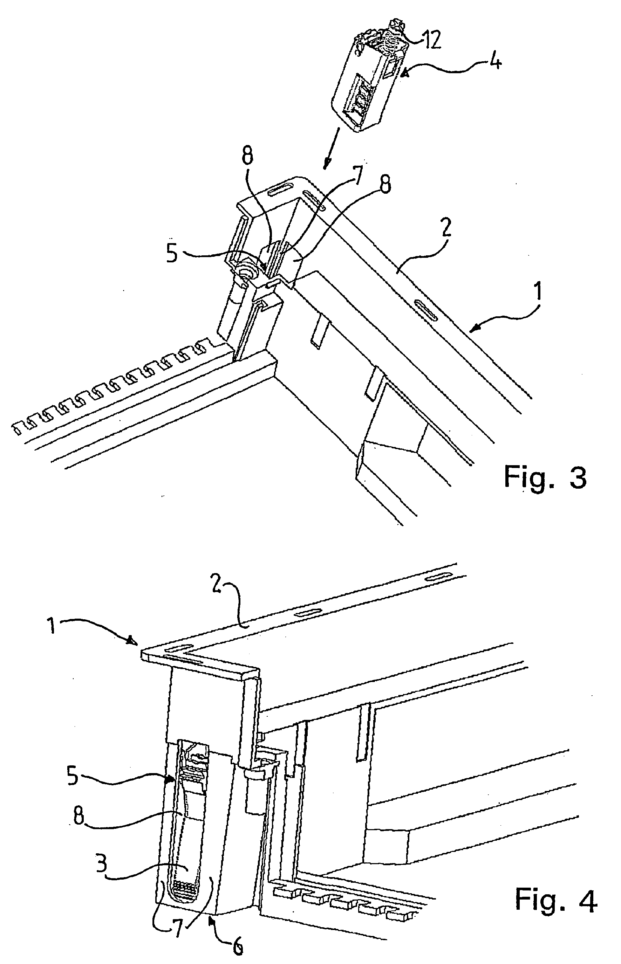

Die Baueinheit 4 weist ein Verankerungselement 3 und einen Antriebsmechanismus mit einer Schraube 12 auf, mit dem sich das Verankerungselement 3 verschwenken lässt. Wie Fig. 3 und 4 erkennen lassen, wird die Baueinheit 4 von der Vorderseite des Kastens 1 in den Steckplatz 5 eingesetzt. Sie wird durch eine hier nicht gezeigte lösbare Raste, die an der Baueinheit 4 oder am Steckplatz angeordnet sein kann und in eine entsprechende Ausnehmung am jeweiligen anderen Teil eingreift, am Kasten 1 befestigt. Das Verankerungselement 3 kann durch Drehen der Schraube 12 durch die Öffnung 8 in den Seitenwänden 7 des Steckplatzes 5 ausgeschwenkt werden.

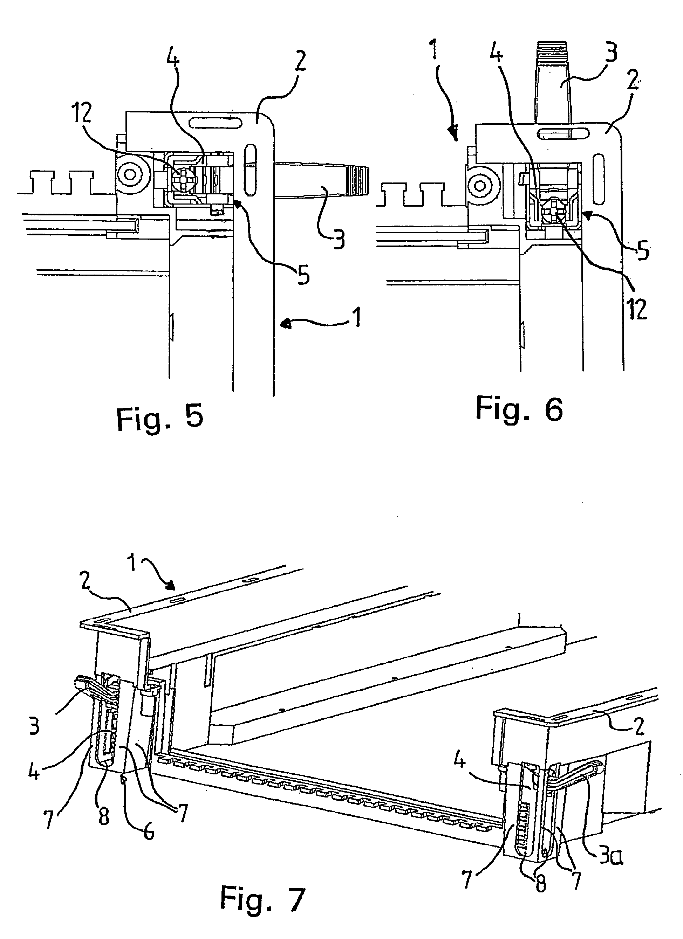

Die Fig. 5 bis 7 zeigen, dass die Baueinheit 4 wahlweise in zwei zueinander senkrechten Positionen in den Steckplatz 5 eingesetzt werden kann.
In der in Fig. 5 gezeigten Position ist das Verankerungselement 3 auf der rechten Seite des Kastens 1 zum Hintergreifen des vertikalen Randes einer Wandschalenöffnung 9 verschwenkt, in der in Fig. 6 gezeigten Anordnung ist es nach oben verschwenkt und kann den horizontalen Rand hintergreifen.
In Fig. 7 ist die Oberseite eines Installationskastens 1 mit einer zum linken vertikalen Rand und einer zum oberen horizontalen Rand ausgerichteten Baueinheit 4 mit entsprechend ausgeschwenkten Verankerungselementen 3 dargestellt.

Für die Befestigung des Kastens 1 gemäß Fig. 1 würden die Baueinheiten 4 wie in Fig. 6 dargestellt bzw. wie die in Fig. 7 gezeigte, zum oberen Rand hin ausgerichtete Baueinheit 4, in den Kasten 1 eingesetzt.

## Patentansprüche

1. Vorrichtung zur Verankerung eines installationskastens, insbesondere eines Zähler und/oder Verteilerkastens (1), in einer Öffnung (9) in einer Wandschale (10), wobei der in die Öffnung (9) versenkte Kasten (1) am Rand der Öffnung (9) mit einem Anschlag (2) gegen die Vorderseite der Wandschale (10) anliegt, mit wenigstens einem Verankerungselement (3), das durch einen von der Vorderseite des Kastens (1) her zugänglichen Antriebs- und Spannmechanismus in eine Position bewegbar ist, in der es die Wandschale (10) am Rand der Öffnung (9) hintergreift und den Kasten (1) zwischen dem Anschlag (2) und dem Verankerungselement (3) einspannt,
**dadurch gekennzeichnet,**
**dass** das Verankerungselement (3) zum wahlweisen Hintergreifen der Wandschale an dem horizontalen Rand oder einem vertikalen Rand der Öffnung (9) vorgesehen ist oder dass das Verankerungselement (3) zum Hintergreifen der Wandschale an dem horizontalen Rand vorgesehen ist und ein weiteres Verankerungselement (3) zum Hintergreifen der Wandschale an dem vertikalen Rand vorgesehen ist.

2. Vorrichtung nach Anspruch 1,
**dadurch gekennzeichnet,**
**dass** das Verankerungselement (3) und der Antriebs- und Spannmechanismus in einer von dem Kasten (1) getrennten Baueinheit (4) zusammengefasst sind und für die Aufnahme der Baueinheit (4) am Kasten (1) ein Sitz (5) vorgesehen ist oder zwei, vorzugsweise um 90° zueinander verdreht angeordnete, Sitze (5) vorgesehen sind.

3. Vorrichtung nach Anspruch 2,
**dadurch gekennzeichnet,**
**dass** der Sitz (5) an einer Ecke des Kastens (1) angeordnet und vorzugsweise zur Aufnahme der Baueinheit (4) in zwei um 90° zueinander verdrehten Positionen eingerichtet ist.

4. Vorrichtung nach Anspruch 2 oder 3,
**dadurch gekennzeichnet,**
**dass** ein Gegenhalter durch einen zum Kastenboden parallelen Boden (6) des Sitzes bzw. der Sitze (5) gebildet ist.

5. Vorrichtung nach einem der Ansprüche 2 bis 4,
**dadurch gekennzeichnet,**
**dass** der Sitz bzw. die Sitze (5) eine die Baueinheit (4) in Richtung senkrecht zum Gegenhalter (6) stützende Halterung (7) aufweist bzw. aufweisen.

6. Vorrichtung nach einem der Ansprüche 2 bis 5,
**dadurch gekennzeichnet,**
**dass** die Baueinheit (4) und/oder der Sitz (5) bzw. die Sitze ein Mittel zur Befestigung der Baueinheit am Kasten (1) aufweist bzw. aufweisen.

7. Vorrichtung nach Anspruch 6,
**dadurch gekennzeichnet,**
**dass** das Mittel eine, vorzugsweise lösbare, Raste ist.

8. Vorrichtung nach einem der Ansprüche 1 bis 8,
**dadurch gekennzeichnet,**
**dass** die Baueinheit (4) von der Vorderseite des Kastens (1) aus in den Sitz (5) einsetzbar ist.

## Claims

1. Device for anchoring an installation cabinet, in particular a meter and/or distributor cabinet (1), in an opening (9) in a wall shell (10), with the cabinet (1) which is recessed in the opening (9) resting against the front face of the wall shell (10) at the edge of the opening (9) by way of a stop (2), having at least one anchoring element (3) which can be moved to a position in which it engages behind the wall shell (10) at the edge of the opening (9) and clamps the cabinet (1) between the stop (2) and the anchoring element (3) by a drive and clamping mechanism which is accessible from the front face of the cabinet (1), **characterized in that** the anchoring element (3) is intended to selectively engage behind the wall shell at the horizontal edge or a vertical edge of the opening (9), or **in that** the anchoring element (3) is intended to engage behind the wall shell at the horizontal edge, and a further anchoring element (3) is intended to engage behind the wall shell at the vertical edge.

2. Device according to Claim 1, **characterized in that** the anchoring element (3) and the drive and clamping mechanism are combined to form a unit (4) which is separate from the cabinet (1), and a seat (5) is intended to accommodate the unit (4) on the cabinet (1), or two seats (5) are provided, said seats preferably being arranged such that they are rotated through 90° in relation to one another.

3. Device according to Claim 2, **characterized in that** the seat (5) is arranged in a corner of the cabinet (1) and is preferably designed to accommodate the unit (4) in two positions which are rotated through 90° in relation to one another.

4. Device according to Claim 2 or 3, **characterized in that** a mating holder is formed by a base (6) of the seat or the seats (5) which is parallel to the cabinet base.

5. Device according to one of Claims 2 to 4, **characterized in that** the seat or seats (5) has or have a mount (7) which supports the physical unit (4) in the direction perpendicular to the mating holder (6).

6. Device according to one of Claims 2 to 5, **characterized in that** the unit (4) and/or the seat (5) or the seats has or have a means for fixing the unit to the cabinet (1).

7. Device according to Claim 6, **characterized in that** the means is a, preferably releasable, detent.

8. Device according to one of Claims 1 to 7, **characterized in that** the unit (4) can be inserted into the seat (5) from the front face of the cabinet (1).

## Revendications

1. Dispositif pour l'ancrage d'un coffret d'installation, en particulier d'un coffret de compteur et/ou de distributeur (1), dans une ouverture (9) dans une coque de paroi (10), dans lequel le coffret (1) enfoncé dans l'ouverture (9) est appliqué au bord de l'ouverture (9) avec une butée (2) contre la face antérieure de la coque de paroi (10), comprenant au moins un élément d'ancrage (3), qui est déplaçable au moyen d'un mécanisme d'entraînement et de tensionnement accessible depuis la face antérieure du coffret (1) jusque dans une position dans laquelle il engage la coque de paroi (10) par l'arrière au bord de l'ouverture (9), et enserre le coffret (1) entre la butée (2) et l'élément d'ancrage (3),
**caractérisé en ce que**
l'élément d'ancrage (3) est prévu pour engager la coque de paroi par l'arrière au choix au niveau du bord horizontal ou au niveau d'un bord vertical de l'ouverture (9), ou **en ce que** l'élément d'ancrage (3) est prévu pour engager la coque de paroi par l'arrière au niveau du bord horizontal et un autre élément d'ancrage (3) est prévu pour engager la coque de paroi par l'arrière au niveau du bord vertical.

2. Dispositif selon la revendication 1,
**caractérisé en ce que** l'élément d'ancrage (3) et le mécanisme d'entraînement et de tensionnement sont regroupés dans une unité structurelle (4) séparée du coffret (1), et **en ce que** pour la réception de l'unité structurelle (4) sur le coffret (1) il est prévu un siège (5) ou deux sièges, de préférence agencés tournés de 90° l'un par rapport à l'autre.

3. Dispositif selon la revendication 2,
**caractérisé en ce que** le siège (5) est agencé au niveau d'un coin du coffret (1) et est de préférence conçu pour recevoir l'unité structurelle (4) dans deux positions tournées de 90° l'une par rapport à l'autre.

4. Dispositif selon la revendication 2 ou 3,
**caractérisé en ce qu'**un élément de maintien antagoniste est formé par un fond (6), parallèle au fond du coffret, du siège ou des sièges (5).

5. Dispositif selon l'une des revendications 2 à 4,
**caractérisé en ce que** le siège ou les sièges (5) comprend/comprennent un support (7) qui soutient l'unité structurelle (4) dans une direction perpendiculaire à l'élément de maintien antagoniste (6).

6. Dispositif selon l'une des revendications 2 à 5,
**caractérisé en ce que** l'unité structurelle (4) et/ou le siège (5) ou respectivement les sièges comprend/comprennent un moyen pour la fixation de l'unité structurelle sur le coffret (1).

7. Dispositif selon la revendication 6,
**caractérisé en ce que** ledit moyen est un enclenchement, de préférence libérable.

8. Dispositif selon l'une des revendications 1 à 7,
**caractérisé en ce que** l'unité structurelle (4) est susceptible d'être mise en place dans le siège (5) depuis la face antérieure du coffret (1).
